# EUROPÄISCHE PATENTSCHRIFT

(11) **EP 0 563 537 B1**
(45) Veröffentlichungstag und Bekanntmachung des Hinweises auf die Patenterteilung: **22.11.1995**
(21) Anmeldenummer: 93101708.1
(22) Anmeldetag: 04.02.1993
(51) Int. Cl.: B64D 9/00

(54) **Vorrichtung zur Führung**
Guiding device
Dispositif de guidage

(30) Priorität: 28.03.1992 DE 4210191
(43) Veröffentlichungstag der Anmeldung: 06.10.1993
(73) Patentinhaber: Daimler-Benz Aerospace Airbus Gesellschaft mit beschränkter Haftung, 21129 Hamburg (DE)
(72) Erfinder: Eilenstein-Wiegmann, Wilfried, W-2805 Stuhr (DE); Vogg, Günter, W-2800 Bremen 1 (DE)
(74) Vertreter: Hansmann, Dierk, Dipl.-Ing.

(56) Entgegenhaltungen:
- US-A- 3 906 870
- US-A- 5 098 038

## Beschreibung

Die Erfindung betrifft eine Vorrichtung zur Führung von Lasten innerhalb eines Frachtraumes eines Flugzeuges, insbesondere zur Führung von Frachtbehältern oder Paletten, die ein die Last seitlich ausrichtendes Leitelement aufweist.

Zur Ermöglichung einer definierten Positionierung von Lasten während einer Beladung von Flugzeugfrachträumen durch ein Ladetor hindurch ist es erforderlich, die Lasten durch geeignete Leitelemente derart auszurichten, daß bei einer Verschiebung eine vorgesehene Orientierung der Lasten erhalten bleibt und ein Verkanten bzw. ein Verdrehen vermieden wird.

Hierzu können Leitschienen verwendet werden, die sich im wesentlichen parallel zu einer Einführrichtung der Lasten erstrecken und die im Bereich einer Bodenstruktur des Flugzeuges angeordnet sind. Einer stationären Anordnung derartiger Leitelemente stand bislang entgegen, daß durch die Leitelemente ein beabsichtigtes Verschieben der Lasten in Richtung einer Längsachse des Flugzeuges behindert wird. Eine derartige Verschiebemöglichkeit ist jedoch zweckmäßig, um eine optimale Ausnutzung des zur Verfügung stehenden Stauraumes herbeiführen zu können. Darüber hinaus sind die bekannten Leitelemente auch nicht in ausreichendem Maße in der Lage, eine ausreichende Führung von Paletten vorzunehmen, da die Beweglichkeit der Paletten in Richtung einer Flugzeughochachse nicht begrenzt wird.

Aufgabe der vorliegenden Erfindung ist es daher, eine Vorrichtung der einleitend genannten Art derart zu konstruieren, daß sowohl eine Beweglichkeit der Last in Richtung einer Flugzeughochachse begrenzt werden kann als auch eine Positionierung des Leitelementes derart möglich ist, daß eine Bewegung der Lasten in Richtung der Flugzeuglängsachse erfolgen kann.

Diese Aufgabe wird erfindungsgemäß dadurch gelöst, daß das Leitelement von einem Träger gehaltert ist, der über ein Schwenkgelenk mit einer Bodenstruktur des Flugzeug verbindbar ist, wobei sich die Schwenkachse des Trägers im wesentlichen horizontal und parallel zu einer vom Leitelement aufgespannten Ebene erstreckt, zur Führung der Last ein die Last mindestens bereichsweise in lotrechter Richtung übergreifendes Sicherungselement vorgesehen ist und daß zur Verschwenkung des Trägers zwischen dem Träger und einem Gegenlager ein Kniehebel angeordnet ist.

Durch die verschwenkbare Anordnung des Trägers ist es möglich, das Leitelement in den Bereich der Bodenstruktur zu verschwenken und hierdurch eine Überfahrbarkeit durch die Lasten bereitzustellen. Es steht dabei nur eine Höhe von ca. 5,08 cm (2") zur Verfügung. Über die Kniehebelbetätigung wird zum einen eine einfache Betätigung gewährleistet, zum anderen erfolgt nach einem Hochschwenken des Leitelementes durch die relativ zueinander positionierten Schenkel des Kniehebels eine Selbsthemmung, ohne daß zusätzliche Arretierungselemente erforderlich wären. Zur Führung der Last in lotrechter Richtung sind Sicherungselemente vorgesehen, die ausgehend vom Leitelement die Last übergreifen und dadurch beispielsweise ein Abheben von Paletten von der Bodenstruktur verhindern. Hierdurch werden insbesondere Kippbewegungen bei einer ungleichmäßen Beladung von Paletten verhindert.

Eine Montage mit einem geringen Arbeitsaufwand wird dadurch ermöglicht, daß das Schwenkgelenk sowie das Gegenlager im Bereich eines Adapters angeordnet sind, der im Bereich von Sitzschienen der Bodenstruktur arretierbar ist.

Zur Ermöglichung einer gegen ein unbeabsichtigtes Verschwenken gesicherten Anordnung des Leitelementes ohne zusätzliche Arretierungsmittel wird vorgeschlagen, daß sich der Kniehebel in einer gestreckten Anordnung mit einem Neigungswinkel im Bereich von etwa 30 bis 60 Grad zur Bodenstruktur erstreckt und von einem Druckstück arretierbar ist.

Eine sichere Führung der Last in lotrechter Richtung sowie eine Positionierbarkeit des Sicherungselementes relativ zum Leitelement wird dadurch ermöglicht, daß das Sicherungselement als ein im wesentlichen senkrecht zum Leitelement anordbarer Leitfinger ausgebildet ist.

Zur Gewährleistung einer Entfernbarkeit des Sicherungselementes aus einem Bereich oberhalb der Bodenstruktur in einem in den Bereich der Bodenstruktur hineingeschwenkten Zustand des Leitelementes wird vorgeschlagen, daß das Sicherungselement in eine vom Leitelement aufgespannte Ebene hineinverschwenkbar angeordnet ist.

Eine einfache mechanische Verschwenkbarkeit in Abhängigkeit von einer jeweiligen Schwenkpositionierung des Gleitelementes wird für das Sicherungselement dadurch bereitgestellt, daß zur Verschwenkung des Sicherungselementes eine eine jeweilige Schwenkpositionierung des Leitelementes umsetzende Kurvensteuerung vorgesehen ist.

Die Kurvensteuerung kann in einfacher Weise dadurch realisiert werden, daß das Sicherungselement mit einer Kurvenfläche versehen ist, die bei einem Einschwenken des Leitelementes in den Bereich der Bodenstruktur an einem Nockenprofil eines Nockens entlanggleitet, der mit dem Adapter verbunden ist.

Zur Ermöglichung einer einfachen Positionierbarkeit der Last im Bereich des Leitelementes in einem in die Bodenstruktur hineinverschwenkten Zustand wird vorgeschlagen, daß im Bereich des Adapters mindestens eine Führungsrolle gehaltert ist, die in einem eingeklappten Zustand des Leitelementes über eine vom Leitelement aufgespannte Ebene hinausragt.

Die Flexibilität bei einer Handhabung des Leitelementes wird dadurch erhöht, daß zwischen zwei von den Trägern im wesentlichen ausgebildeten Klappeinheiten ein die Klappeinheiten miteinander verbindendes Zwischenstück ngeordnet ist, das von Verriegelungselementen mit den Klappeinheiten verbunden ist.

Zur Ermöglichung einer einfachen Positionierbarkeit, insbesondere auch zur Kompensation von Schwerkrafteinflüssen, wird vorgeschlagen, daß im Bereich mindestens einer der Klappeinheiten eine die Klappeinheiten relativ zum Adapter verspannende Rückstellfeder angeordnet ist.

In den Zeichnungen ist ein Ausführungsbeispiel der Erfindung schematisch dargestellt. Es zeigen:
- Fig. 1: eine Seitenansicht der Vorrichtung gemäß Blickrichtung I in Figur 3,
- Fig. 2: eine Draufsicht gemäß Blickrichtung II in Figur 3,
- Fig. 3: einen Querschnitt gemäß Schnittlinie III in Figur 2,
- Fig. 4: einen Querschnitt gemäß Schnittlinie IV-IV in Figur 2,
- Fig. 5: eine Darstellung der Vorrichtung gemäß Figur 3 in einem eingeklappten Zustand,
- Fig. 6: eine schematische Darstellung einer hochgeklappten Vorrichtung,
- Fig. 7: eine Prinzipdarstellung der Vorrichtung während der Durchführung eines Einklappens in den Bereich der Bodenstruktur, bei dem die Sicherungselemente von Nocken derart verschwenkt werden, daß sie nicht aus der von der Bodenstruktur aufgespannten Ebene herausragen **und**
- Fig. 8: eine Darstellung entsprechend Figur 7 nach einer Beendigung des Einklappvorganges.

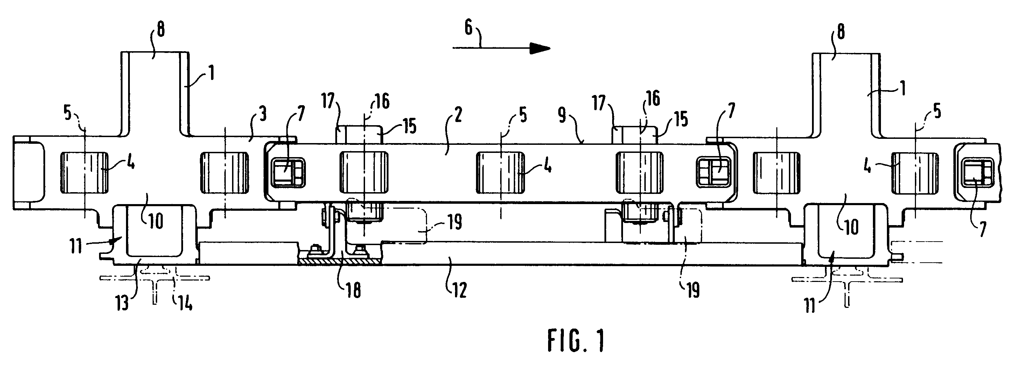

Die Vorrichtung besteht aus Klappeinheiten (1), die entsprechend der Darstellung in Figur 1 von Zwischenstücken (2) miteinader verbindbar sind. Die Klappeinheiten (1) bilden gemeinsam mit den Zwischenstücken (2) Leitelemente (3) aus, die mit Rollen (4) versehen sind, die rotationsfähig gelagert sind und sich mit ihren Rotationsachsen (5) senkrecht zu einer Transportrichtung (6) erstrecken. Die Verbindung der Klappeinheiten (1) mit den Zwischenstücken (2) erfolgt über Verriegelungselemente (7). Die Klappeinheiten (1) ragen mit Endstücken (8) über eine obere Begrenzung (9) der Zwischenstücke (2) hinaus.

Die Klappeinheiten (1) bestehen im wesentlichen aus einem Träger (10), der über ein Schwenkgelenk (11) mit einer Halterung im Bereich einer Bodenstruktur (12) eines Flugzeuges verbunden ist. Insbesondere ist daran gedacht, den Träger (10) über einen Adapter (13) mit der Bodenstruktur (12) zu verbinden, der im Bereich von Sitzschienen (14) im Bereich der Bodenstruktur (12) arretierbar ist. Der Adapter (13) wird dadurch direkt mit der Sitzschiene (14) verbunden.

Zur Ermöglichung einer lotrechten Sicherung von Lasten sind Sicherungselemente (15) vorgesehen, die bezüglich einer Drehachse (16) verschwenkbar gelagert sind. Die Sicherungselemente (15) weisen eine Kurvenfläche (17) auf, in die bei einem Verschwenken der Klappeinheiten (1) in den Bereich der Bodenstruktur (12) ein Nocken (18) eingreift, der eine Verschwenkung der Sicherungselemente (15) um die Drehachse (16) hervorruft und ein Herausstehen der Sicherungselemente (15) aus einer von der Bodenstruktur (12) aufgespannten Ebene vermeidet.

Eine eingeklappte Positionierung (19) der Sicherungselemente (15) ist in Figur 1 gestrichelt dargestellt.

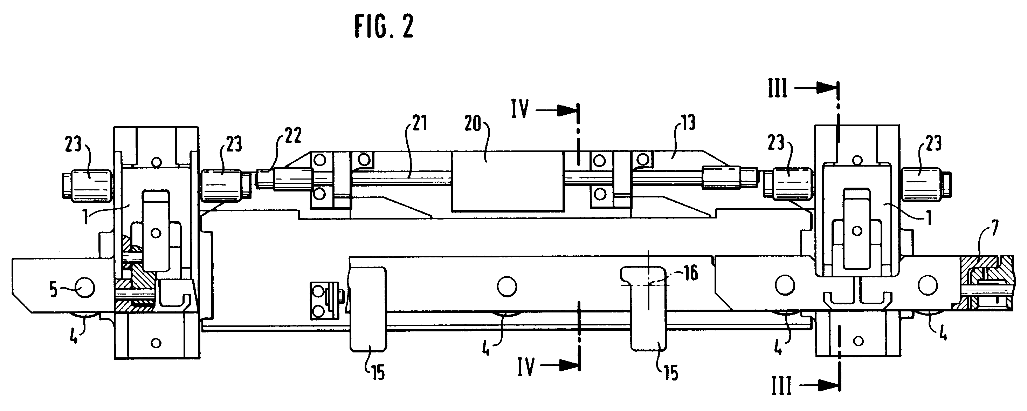

Aus der Darstellung in Figur 2 ist ersichtlich, daß eine Verstellung der Klappeinheiten (1) mit Hilfe eines Antriebes (20) erfolgt, der beispielsweise als ein Motor oder als ein Hebel ausgebildet sein kann. Über eine Antriebswelle (21) ist der Antrieb (20) mit einer Kupplung (22) verbunden, die eine formschlüssige Verbindung zur Positionierung der Klappeinheiten (1) herstellt. Im Bereich der Bodenstruktur (12) sind Führungsrollen (23) vorgesehen, die bei einer Verschwenkung der Klappeinheiten (1) in die Bodenstruktur (12) hinein über die Klappeinheiten (1) hervorragen und eine Verschieblichkeit von Lasten erleichtern.

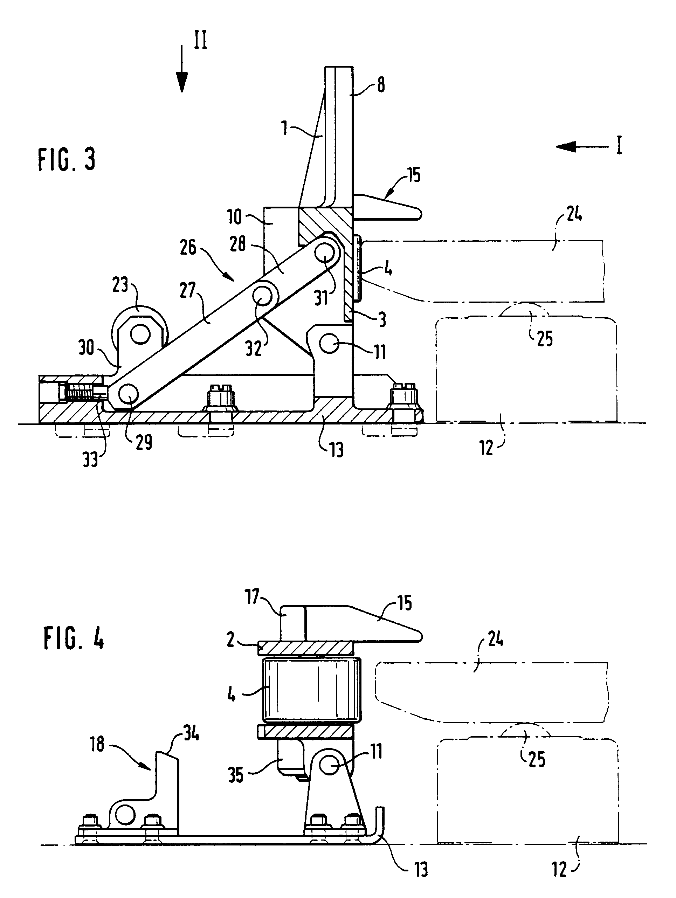

In der in Figur 3 dargestellten aufgeklappten Positionierung des Leitelementes (3) überkragt das Sicherungselement (15) eine Palette (24), die auf Tragkugeln (25) im Bereich der Bodenstruktur (12) gleitfähig geführt ist. Die Verstellung des Leitelementes (3) erfolgt mit Hilfe eines Kniehebels (26), der aus einem Fußsegment (27) sowie einem Kopfsegment (28) ausgebildet ist. Das Fußsegment (27) ist über ein Fußschwenklager (29) drehbeweglich mit einem im Bereich des Adapters (13) angeordneten Gegenlager (30) verbunden. Das Kopfsegment (28) ist über ein Kopfschwenklager (31) an den Träger (10) angelenkt. Das Fußsegment (27) und das Kopfsegment (28) sind miteinander beweglich über ein Hebelschwenklager (32) verbunden. Das Fußsegment (27) weist eine größere Längserstreckung als das Kopfsegment (28) auf. Zur Arretierung des Kniehebels (26) ist ein Druckstück (33) vorgesehen, das im Bereich des Adapters (13) gehaltert ist und auf eine hintere Seite des Fußsegmentes (27) drückt.

Gemäß der Darstellung in Figur 4 ist der Nocken (18) im Bereich seiner dem Sicherungselement (15) zuwendbaren Ausdehnung mit einem Nockenprofil (34) versehen, das bei einer Verschwenkung des Leitelementes (3) an der Kurvenfläche (17) des SicherungselementeS (15) entlanggleitet und die Verschwenkung des Sicherungselementes (15) hervorruft. Zur Zurückführung des Leitelementes (3) in eine Ausgangspositionierung ist eine Rückstellfeder (35) vorgesehen. Das Leitelement (3) kann einteilig mit einer Fußplatte (36) ausgebildet werden.

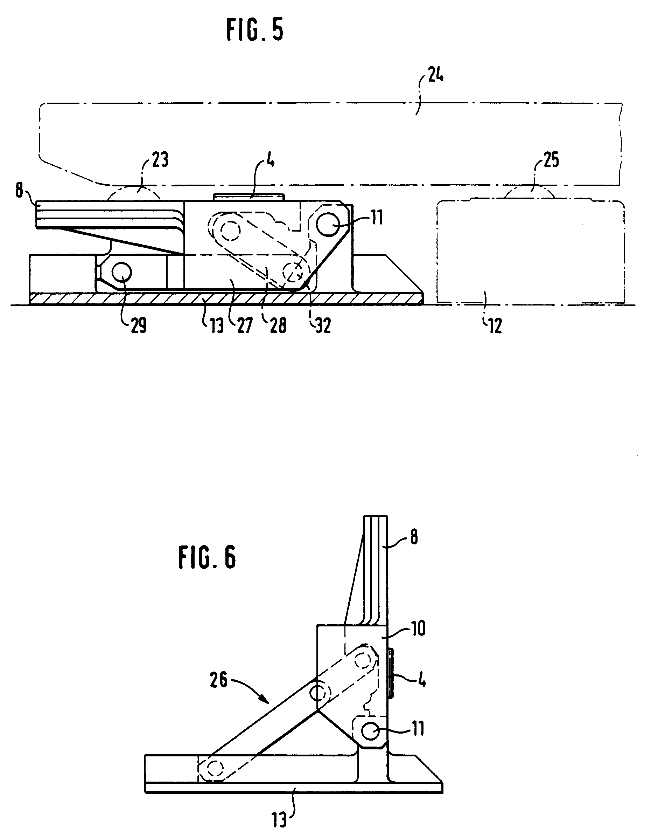

Nach der Durchführung einer Verschwenkung des Leitelementes (3) in die Bodenstruktur (12) hinein ergibt sich die in Figur 5 dargestellte Anordnung. Das Leitelement (3) bleibt dabei oberhalb der Flugzeugbodenebene. Die Palette (24) wird dabei sowohl von den Tragkugeln (25) als auch von den Führungsrollen (23) geführt. Die zusammengeklappte Darstellung gemäß Figur 5 korrespondiert mit der hochgeklappten Positionierung gemäß Figur 3.

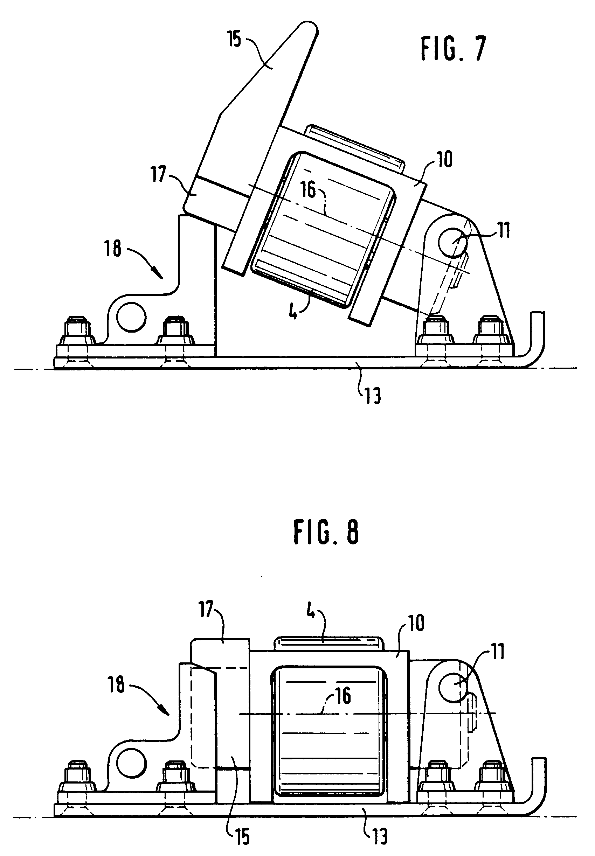

Eine Erläuterung der Durchführung der Einschwenkbewegung des Sicherungselementes (15) bei einem Einklappen des Leitelementes (3) in den Bereich der Bodenstruktur (12) ergibt sich aus den Figuren 7 und 8. Bei einem Absenken des Trägers (10) gelangt das Sicherungselement (15) mit seiner Kurvenfläche (17) in den Bereich des Nockens (18) und bei einem weiteren Absenken des Trägers (10) in Richtung auf die Bodenstruktur (12) gleitet die Kurvenfläche (17) am Nockenprofil (34) entlang und das Sicherungselement (15) wird aus der Zeichenebene herausgeschwenkt. Es erfolgt dabei eine Drehbewegung um die Drehachse (16).

## Patentansprüche

1. Vorrichtung zur Führung von Lasten innerhalb eines Frachtraumes eines Flugzeuges, insbesondere zur Führung von Frachtbehältern oder Paletten, die ein die Last seitlich ausrichtendes Leitelement aufweist, dadurch gekennzeichnet, daß das Leitelement (3) von einem Träger (10) gehaltert ist, der über ein Schwenkgelenk (11) mit einer Bodenstruktur (12) des Flugzeuges verbindbar ist, wobei sich die Schwenkachse des Trägers (10) im wesentlichen horizontal und parallel zu einer vom Leitelement (3) aufgespannten Ebene erstreckt, daß zur Führung der Last ein die Last mindestens bereichsweise in lotrechter Richtung übergreifendes Sicherungselement (15) vorgesehen ist und daß zur Verschwenkung des Trägers (10) zwischen dem Träger (10) und einem Gegenlager (30) ein Kniehebel (26) angeordnet ist.

2. Vorrichtung nach Anspruch 1, dadurch gekennzeichnet, daß das Schwenkgelenk (11) sowie das Gegenlager (30) im Bereich eines Adapters (13) angeordnet sind, der im Bereich von Sitzschienen der Bodenstruktur (12) arretierbar ist.

3. Vorrichtung nach Anspruch 1 oder 2, dadurch gekennzeichnet, daß sich der Kniehebel (26) in einer gestreckten Anordnung mit einem Neigungswinkel im Bereich von etwa 30 bis 60 Grad zur Bodenstruktur (12) erstreckt und von einem Druckstück (33) arretierbar ist.

4. Vorrichtung nach einem der Ansprüche 1 bis 3, dadurch gekennzeichnet, daß das Sicherungselement (15) als ein im wesentlichen senkrecht zum Leitelement (3) anordbarer Leitfinger ausgebildet ist.

5. Vorrichtung nach einem der Ansprüche 1 bis 4, dadurch gekennzeichnet, daß das Sicherungselement (15) in eine vom Leitelement (3) aufgespannte Ebene hineinverschwenkbar angeordnet ist.

6. Vorrichtung nach einem der Ansprüche 1 bis 5, dadurch gekennzeichnet, daß zur Verschwenkung des Sicherungselementes (15) eine eine jeweilige Schwenkpositionierung des Leitelementes (3) umsetzende Kurvensteuerung vorgesehen ist.

7. Vorrichtung nach einem der Ansprüche 2 bis 6, dadurch gekennzeichnet, daß das Sicherungselement (15) mit einer Kurvenfläche (17) versehen ist, die bei einem Einschwenken des Leitelementes (3) in den Bereich der Bodenstruktur (12) an einem Nockenprofil (34) eines Nockens (18) entlanggleitet, der mit dem Adapter (13) verbunden ist.

8. Vorrichtung nach einem der Ansprüche 2 bis 7, dadurch gekennzeichnet, daß im Bereich des Adapters (13) mindestens eine Führungsrolle (23) gehaltert ist, die in einem eingeklappten Zustand des Leitelementes (3) über eine vom Leitelement (3) aufgespannte Ebene hinausragt.

9. Vorrichtung nach einem der Ansprüche 1 bis 8, dadurch gekennzeichnet, daß zwischen zwei von den Trägern (10) im wesentlichen ausgebildeten Klappeinheiten (1) ein die Klappeinheiten (1) miteinander verbindendes Zwischenstück (2) angeordnet ist, das von Verriegelungselementen (7) mit den Klappeinheiten (1) verbunden ist.

10. Vorrichtung nach einem der Ansprüche 2 bis 9, dadurch gekennzeichnet, daß im Bereich mindestens einer der Klappeinheiten (1) eine die Klappeinheiten (1) relativ zum Adapter (13) verspannende Rückstellfeder (35) angeordnet ist.

## Claims

1. Device for guiding loads inside a cargo hold of an aircraft, in particular for guiding freight containers or pallets, having a guide element which laterally aligns the load, characterized in that the guide element (3) is held by a carrier (10) which is connectable by a swivel joint (11) to a floor structure (12) of the aircraft, the swivelling axis of the carrier (10) extending substantially horizontally and parallel to a plane defined by the guide element (3), that a retaining element (15) which engages vertically over the load at least in sections is provided for guiding the load and that, for swivelling the carrier (10), an articulated lever (26) is disposed between the carrier (10) and an abutment (30).

2. Device according to claim 1, characterized in that the swivel joint (11) and the abutment (30) are disposed in the region of an adapter (13) which is fixable in the region of seat rails of the floor structure (12).

3. Device according to claim 1 or 2, characterized in that the articulated lever (26) in a straight arrangement extends at an angle of inclination in the region of about 30 to 60° relative to the floor structure (12) and is lockable by a thrust piece (33).

4. Device according to one of claims 1 to 3, characterized in that the retaining element (15) takes the form of a guide finger which is disposable substantially perpendicular to the guide element (3).

5. Device according to one of claims 1 to 4, characterized in that the retaining element (15) is disposed so as to be capable of swivelling into a plane defined by the guide element (3).

6. Device according to one of claims 1 to 5, characterized in that, for swivelling the retaining element (15), a cam control system is provided which transposes a respective swivel positioning of the guide element (3).

7. Device according to one of claims 2 to 6, characterized in that the retaining element (15) is provided with a cam surface (17) which, upon swivelling of the guide element (3) into the region of the floor structure (12), slides along a cam profile (34) of a cam (18) which is connected to the adapter (13).

8. Device according to one of claims 2 to 7, characterized in that supported in the region of the adapter (13) is at least one guide roller (23) which, in an inward hinged state of the guide element (3), projects beyond a plane defined by the guide element (3).

9. Device according to one of claims 1 to 8, characterized in that disposed between two hinged units (1) formed substantially by the carriers (10) is an intermediate piece (2), which connects the hinged units (1) to one another and is connected by locking elements (7) to the hinged units (1).

10. Device according to one of claims 2 to 9, characterized in that a restoring spring (35) which braces the hinged units (1) relative to the adapter (13) is disposed in the region of at least one of the hinged units (1).

## Revendications

1. Dispositif destiné au guidage des charges à l'intérieur d'une soute à fret d'un avion, plus particulièrement dispositif destiné au guidage de conteneurs à marchandises ou de palettes et présentant un élément de guidage dirigeant la charge latéralement, caractérisé en ce que l'élément de guidage (3) est maintenu par un support (10), lequel peut être connecté à une structure de base (12) de l'avion par l'intermédiaire d'une articulation pivotante (11), l'axe pivotant du support (10) s'étendant principalement horizontalement et parallèlement par rapport à un plan serré par l'élément de guidage (3), en ce que un élément d'arrêt (15) saisissant la charge au moins partiellement dans la direction verticale est prévu pour le guidage de la charge et en ce que un levier articulé (26) est disposé entre le support (10) et une butée (30) afin de permettre le pivotement du support (10).

2. Dispositif selon la revendication 1, caractérisé en ce que l'articulation pivotante (11) ainsi que la butée (30) sont disposées sur un adaptateur (13), lequel peut être bloqué dans la zone des rails d'appui de la structure de base (12).

3. Dispositif selon l'une ou l'autre des revendications 1 et 2, caractérisé en ce que le levier articulé (26) s'étend dans une position rectiligne conformément à un angle d'inclinaison compris entre approximativement 30 et 60° par rapport à la structure de base (12) et peut être bloqué par un organe de pression (33).

4. Dispositif selon l'une ou l'autre des revendications 1 à 3, caractérisé en ce que l'élément de sécurité (15) est conçu comme un doigt de guidage pouvant être placé principalement perpendiculairement par rapport à l'élément de guidage (3).

5. Dispositif selon l'une ou l'autre des revendications 1 à 4, caractérisé en ce que l'élément de sécurité (15) est disposé de manière à pouvoir pivoter vers l'intérieur dans un plan serré par l'élément de guidage (3).

6. Dispositif selon l'une ou l'autre des revendications 1 à 5, caractérisé en ce que une commande à cames est prévue pour assurer le pivotement de l'élément de sécurité (15) en relation avec la position de pivotement de l'élément de guidage (3).

7. Dispositif selon l'une ou l'autre des revendications 2 à 6, caractérisé en ce que l'élément de sécurité (15) est pourvu d'une surface courbée (17) qui, lors d'un pivotement de l'élément de guidage (3) dans la zone de la structure de base (12), coulisse le long d'un profil de came (34) d'une came (18) reliée à l'adaptateur (13).

8. Dispositif selon l'une ou l'autre des revendications 2 à 7, caractérisé en ce que dans la zone de l'adaptateur (13) est monté au moins un rouleau de guidage (23) qui, en position repliée de l'élément de guidage (3), fait saillie d'un plan serré par l'élément de guidage (3).

9. Dispositif selon l'une ou l'autre des revendications 1 à 8, caractérisé en ce que entre deux unités pivotantes (1) formées principalement par les supports (10) est disposée une pièce intermédiaire (2) reliant les unités pivotantes (1) l'une à l'autre et étant connectée avec les unités pivotantes (1) par des éléments de verrouillage (7).

10. Dispositif selon l'une ou l'autre des revendications 2 à 9, caractérisé en ce que dans la zone d'au moins une des unités pivotantes (1) est disposé un ressort de rappel (35) reliant les unités pivotantes (1) par rapport à l'adaptateur (13).
